# EUROPEAN PATENT SPECIFICATION

(11) **EP 3 594 220 B1**
(45) Date of publication and mention of the grant of the patent: **08.05.2024**
(21) Application number: 17899368.9
(22) Date of filing: 16.05.2017
(51) Int. Cl.: C07F 7/18, C08G 77/28, C08G 77/48, C08L 83/14, C08G 77/392, C08K 5/548

(54) **ORGANOSILICON COMPOUND AND METHOD FOR PRODUCING SAME**
ORGANOSILICIUMVERBINDUNG UND VERFAHREN ZUR HERSTELLUNG DAVON
COMPOSÉ SILICIUM ORGANIQUE, ET PROCÉDÉ DE FABRICATION DE CELUI-CI

(30) Priority: 09.03.2017 JP 2017044933
(43) Date of publication of application: 15.01.2020
(73) Proprietor: Shin-Etsu Chemical Co., Ltd., Tokyo 100-0004 (JP)
(72) Inventor: YAMADA Tetsuro, Annaka-shi Gunma 379-0224 (JP); HIROKAMI Munenao, Annaka-shi Gunma 379-0224 (JP); KATAYAMA Taiki, Annaka-shi Gunma 379-0224 (JP)
(74) Representative: Ter Meer Steinmeister & Partner
(86) International application number: PCT/JP2017/018328
(87) International publication number: WO 2018/163446

(56) References cited:
- JP-A- H08 184 960
- JP-A- S56 501 650
- JP-A- 2003 147 208
- JP-A- 2004 526 703
- JP-A- 2007 091 677
- JP-A- 2016 121 075
- US-A- 4 269 991
- XUE LEI ET AL: "Facile, versatile and efficient synthesis of functional polysiloxanes via thiol-ene chemistry", EUROPEAN POLYMER JOURNAL, PERGAMON PRESS LTD OXFORD, GB, vol. 49, no. 5, 11 February 2013 (2013-02-11), pages 1050-1056, XP028525396, ISSN: 0014-3057, DOI: 10.1016/J.EURPOLYMJ.2013.01.017
- SOROKIN, M. S. et al.: "Butylsulfanyl)ethanal and 3-(Organylsulfanyl)butanal 1,1- Dimethylhydrazones", Russian Journal of General Chemistry, vol. 75, no. 6, 2005, pages 891-900, XP019301129,
- VORONKOV, M. G. et al.: "Thermochemistry of organosilicon compounds. III. (Organylthioalkyl)trialkoxysilanes and 1- (organylthioalkyl)silatranes", Journal of Organometallic Chemistry, vol. 359, no. 3, 1989, pages 301-313, XP002441460,
- VORONKOV, M. G. et al.: "Divinyl sulfoxide Communication 7. Nucleophilic addition of triorganylsilylalkanethiols and trialkylsilylalkanols to divinyl sulfoxide", Izvestiya Akademii Nauk SSSR, Seriya Khimicheskaya, no. 4, April 1985 (1985-04), pages 892-896, XP055542539,

## Description

### TECHNICAL FIELD

This invention relates to an organosilicon compound and a method for preparing the same. More particularly, it relates to an organosilicon compound having a silicon group capable of forming a siloxane bond for crosslinking (also referred to as "reactive silicon group," hereinafter) at the end of the molecular chain, the end of the molecular chain being bonded to a silicon-containing organic group via a sulfide-methylene linkage-containing group, and a method for preparing the same.

### BACKGROUND ART

Since reactive silicon groups, especially alkoxysilyl groups are susceptible to hydrolytic condensation in the presence of water, compounds having reactive silicon groups may be used as curable compositions adapted to crosslink and cure in the presence of water or moisture.

Of these compounds, the compounds having a backbone composed of a silicon-containing organic group such as silicone are generally known as terminally reactive silicones. Also, since curable compositions using such compounds are liquid at room temperature and cure into rubber elastomers, they are widely utilized as coating agents, adhesives, and building sealants while taking advantage of such characteristics.

Various types of room temperature curable (RTC) compositions containing terminally reactive silicone are well known depending on the type of reactive silicon group. In the prior art, the compositions in which the reactive silicon group is an alkoxysilyl group, that is, of dealcoholization type capable of curing while releasing alcohol, are favorably used in the above-mentioned applications because they give off no disgustful odor and are not corrosive to metals.

As a typical example of the dealcoholization type composition, Patent Document 1 discloses an RTC composition comprising an alkoxysilyl-endcapped silicone oil as the base polymer.

The RTC compositions of dealcoholization type as described in Patent Document 1, however, are less reactive with air-borne moisture and less curable than prior art compositions of well-known cure types such as deoximation, deacetic acid, and deacetonation types. Then the addition of catalysts such as organotin compounds is indispensable to insure sufficient cure at RT. Because of the concern that the organotin compounds commonly used as the catalyst are toxic to the human body and environment, the use of these compounds is now avoided in harmonization with the recent strict environmental regulations.

When organometallic catalysts such as organotin compounds are added to RTC compositions of dealcoholization type, there arises the problem of poor storage stability that the backbone of silicone oil is cleaved or cracked by the generated alcohol so that the compositions experience a loss of cure or a viscosity buildup with the lapse of time.

For the purpose of improving storage stability, Patent Document 2 discloses a RTC composition comprising an alkoxysilyl-endcapped silicone oil containing a silethylene group as the linking group between the alkoxysilyl group and the silicone oil backbone.

Although the compound of Patent Document 2 achieves satisfactory storage stability, it is still insufficient in cure. When an amine compound is added as the curing catalyst to the compound so that the composition is free of the organotin compound with possible toxicity, there arises the problem that curing takes a long time because of low reactivity.

For the purpose of improving reactivity, Patent Document 3 discloses an alkoxysilyl-endcapped polymer obtained by reacting a hydroxyl-terminated polymer with an isocyanatosilane.

Although the compound of Patent Document 3 is fully reactive, substantial coloring occurs with the lapse of time because the compound contains a urethane or urea bond in the molecule. Thus yellowing resistance and heat resistance are insufficient. It is also considered problems that a low-boiling isocyanatosilane having extreme toxicity is used in the preparation of the endcapped polymer, and a similar low-boiling isocyanatosilane is formed as a result of pyrolysis of a urethane or urea bond at high temperature.

Further, for the purposes of improving reactivity and storage stability, Patent Document 4 discloses a RTC composition comprising an alkoxysilyl-endcapped silicone oil obtained by reacting a vinyl-terminated silicone oil with a mercaptosilane.

Although the compound of Patent Document 4 is effective for improving reactivity and storage stability, curability is still unsatisfactory, particularly when an amine compound is used as the curing catalyst. When the compound of Patent Document 4 is actually examined for heat resistance, it is found less heat resistant than the prior art alkoxysilyl-endcapped silicone oils.

In Patent Document 4, there are described only examples using 3-mercaptopropyltrimethoxysilane as the mercaptosilane, but no examples using other mercaptosilanes such as mercaptomethyltrimethoxysilane. Moreover, in Patent Document 4, there are described only composition examples using titanium based catalysts as the curing catalyst, but no composition examples using amine compounds such as guanidyl group-containing compounds as the catalyst.
US 4 269 991 A relates to organosiloxane compounds containing one thiol group.

### PRIOR ART DOCUMENTS

### PATENT DOCUMENTS

Patent Document 1: JP-A S55-43119
Patent Document 2: JP-B H07-39547
Patent Document 3: JP-A 2004-518801
Patent Document 4: JP-A 2003-147208

### SUMMARY OF INVENTION

### TECHNICAL PROBLEM

An object of the invention, which has been made under the above-mentioned circumstances, is to provide an organosilicon compound which remains fast curable even when an amine compound is used as the curing catalyst, and has good yellowing resistance, heat resistance, storage stability, and safety, and a method for preparing the same.

### SOLUTION TO PROBLEM

Making extensive investigations to attain the above object, the inventors have found that a specific organosilicon compound having a sulfide-methylene bond as the linking group between a reactive silicon group and a backbone composed of a silicon-containing organic group remains fast curable even when an amine compound is used instead of an organotin compound as the curing catalyst, and forms a cured product having yellowing resistance and low toxicity because of the elimination of isocyanatosilanes, and that a composition comprising the compound is suited as a curable composition for forming various materials such as coating agents, adhesives, and sealants. The invention is predicated on this finding.

The invention is provided by the appended claims.

### ADVANTAGEOUS EFFECTS OF INVENTION

Since the organosilicon compound of the invention has a specific sulfide-methylene bond as the linking group between a reactive silicon group and a silicon-containing structure, it has improved properties including fast cure, yellowing resistance, heat resistance, and storage stability, as compared with prior art endcapped silicones. The compound is least toxic because of the elimination of isocyanatosilanes.

The composition comprising the organosilicon compound having such properties may be advantageously and widely used as a curable composition for forming various materials such as coating agents, adhesives, and sealants.

### DESCRIPTION OF EMBODIMENTS

Now the invention is described in detail.

The invention provides an organosilicon compound having formula (2). Notably, the backbone of the organosilicon compound is free of (poly)oxyalkylene structure.

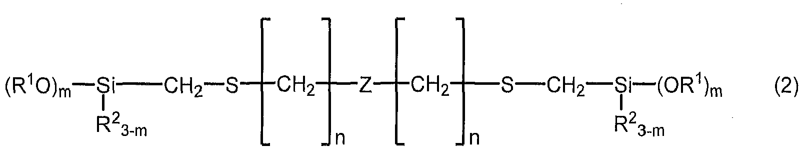

In formula (2), R¹ is each independently a substituted or unsubstituted C₁-C₁₀, preferably C₁-C₄ alkyl group or a substituted or unsubstituted C₆-C₁₀ aryl group, R² is each independently a substituted or unsubstituted C₁-C₁₀, preferably C₁-C₄ alkyl group or a substituted or unsubstituted C₆-C₁₀ aryl group, and m is a number of 1 to 3, n is an integer of at least 2.

The C₁-C₁₀ alkyl group may be straight, branched or cyclic and examples thereof include straight or branched alkyl groups such as methyl, ethyl, n-propyl, isopropyl, n-butyl, s-butyl, t-butyl, n-pentyl, neopentyl, n-hexyl, n-heptyl, n-octyl, n-nonyl, n-decyl, and cycloalkyl groups such as cyclopropyl, cyclobutyl, cyclopentyl, cyclohexyl, cycloheptyl and cyclooctyl.

Examples of the C₆-C₁₀ aryl group include phenyl, tolyl, xylyl, α-naphthyl, and β-naphthyl.

Also, some or all of the hydrogen atoms on these groups may be substituted by halogen atoms such as F, Cl and Br, cyano or the like. Exemplary are 3-chloropropyl, 3,3,3-trifluoropropyl, and 2-cyanoethyl.

Of these, R¹ and R² are preferably selected from methyl, ethyl and phenyl, and methyl is more preferred in view of curability, availability, productivity and cost.

R³ is preferably selected from hydrogen, methyl, and phenyl, and hydrogen is more preferred in view of curability, availability, productivity and cost.

The subscript m is a number of 1 to 3. In view of reactivity, m is preferably 2 to 3, most preferably 3.

The subscript n is an integer of at least 2. In view of reactivity, n is preferably 2 to 15, more preferably 2 to 3, most preferably 2.

On use of such a compound, the cured product exhibits desired mechanical properties, and the composition has more storage stability.

Z is a divalent silicon-containing organic group.

The organosilicon compound is preferably a compound of formula (2) wherein Z has a repeating unit represented by the following structural formula (3). On use of such a compound, the cured product exhibits desired mechanical properties, and the composition has more storage stability.

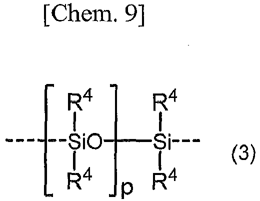

In formula (3), R⁴ is each independently hydrogen, a substituted or unsubstituted C₁-C₁₀, preferably C₁-C₃ alkyl group, or a substituted or unsubstituted C₆-C₁₀ aryl group, p is a number of at least 0, and the broken line represents a valence bond. Examples of the C₁-C₁₀ alkyl and C₆-C₁₀ aryl groups are as exemplified above.

Of these, R⁴ is preferably methyl or phenyl, and methyl is more preferred in view of curability and yellowing resistance.

The subscript p is a number of at least 0. In view of mechanical properties of a cured product and workability of a composition, p is preferably a number of 0 to 2,000, more preferably 0 to 1,500, even more preferably 0 to 1,000.

The number average molecular weight (Mn) of the organosilicon compound is not particularly limited. From the aspects of adjusting the viscosity of a curable composition containing the relevant compound to an appropriate range for efficient working and of imparting sufficient curability, the Mn is preferably 200 to 100,000, more preferably 500 to 50,000, even more preferably 1,000 to 20,000. Notably, the Mn as used herein is measured by gel permeation chromatography (GPC) versus polystyrene standards (the same holds true, hereinafter).

The viscosity of the organosilicon compound is not particularly limited. From the aspects of adjusting the viscosity of a curable composition containing the relevant compound to an appropriate range for efficient working and of imparting sufficient curability, the viscosity is preferably 2 to 100,000 mPa·s, more preferably 5 to 50,000 mPa·s, even more preferably 10 to 20,000 mPa·s. As used herein, the viscosity is measured at 25°C by a Brookfield rotational viscometer.

The organosilicon compound may be obtained by reacting a silicon-containing compound having two alkenyl group per molecule with a compound having mercapto and alkoxysilyl groups represented by the formula (4), the latter compound being referred to as mercaptosilane, hereinafter.

More specifically, a thiol-ene reaction is conducted between the alkenyl group on the silicon-containing compound and the mercapto group on the mercaptosilane.

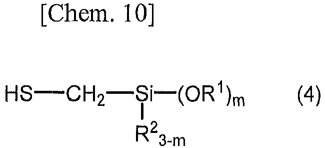

Herein R¹, R², and m are as defined above.

Examples of the mercaptosilane having formula (4) include mercaptomethyltrimethoxysilane, mercaptomethyldimethoxymethylsilane, mercaptomethylmethoxydimethylsilane, mercaptomethyltriethoxysilane, mercaptomethyldiethoxymethylsilane, and mercaptomethylethoxydimethylsilane.

Of these, mercaptomethyltrimethoxysilane, mercaptomethyldimethoxymethylsilane, and mercaptomethyltriethoxysilane are preferred in view of hydrolysis, with mercaptomethyltrimethoxysilane being more preferred.

The silicon-containing compound having two alkenyl group per molecule is not particularly limited as long as it has a backbone skeleton composed of a silicon-containing organic group.

Examples include dimethyldivinylsilane, 1,3-divinyltetramethyldisiloxane, 1,3-divinyltetraphenyldisiloxane, 1,3-diallyltetramethyldisiloxane, , both end vinyl-containing dimethylpolysiloxane, both end vinyl-containing diphenylpolysiloxane, both end vinyl-containing dimethylpolysiloxane/diphenylpolysiloxane copolymers, terminal vinyl-containing methyl-based silicone resins, terminal vinyl-containing phenyl-based silicone resins, terminal vinyl-containing methyl/phenyl-based silicone resins.

Linear structure are preferred in view of mechanical properties of a cured product and storage stability of a composition.

Therefore, the silicon-containing compound having two alkenyl group per molecule is preferably a compound having the structural formula (5). On use of such a compound, the cured product exhibits desired mechanical properties, and the composition has more storage stability.

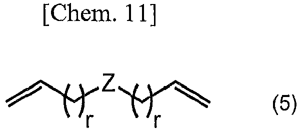

In formula (5), Z is as defined above, and preferably Z is a structure of the above formula (3). On use of such a structure, the cured product exhibits desired mechanical properties, and the composition has more storage stability.

In formula (5), r is an integer of at least 0. In view of reactivity, r is preferably an integer of 0 to 10, more preferably 0 to 3, most preferably 0.

The number average molecular weight (Mn) of the silicon-containing compound having two alkenyl group per molecule is not particularly limited. From the aspects of adjusting the viscosity of a curable composition containing the relevant compound to an appropriate range for efficient working and of imparting sufficient curability, the Mn is preferably 200 to 100,000, more preferably 500 to 50,000, even more preferably 1,000 to 20,000.

Examples of the silicon-containing compound having two alkenyl group per molecule, represented by formula (5), include compounds of the following structural formula, but are not limited thereto.

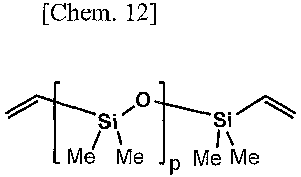

Herein Me is methyl, and p is as defined above.

From the aspects of suppressing formation of by-products during thiol-ene reaction and enhancing storage stability and properties of the desired silicon-containing compound, the silicon-containing compound of formula (5) having two alkenyl group per molecule and the mercaptosilane of formula (4) are preferably combined such that 0.8 to 1.5 moles, more preferably 0.9 to 1.2 moles of mercapto groups on the mercaptosilane of formula (4) are available per mole of alkenyl groups on the silicon-containing compound.

During the thiol-ene reaction, a catalyst may be used for enhancing the reaction rate although the catalyst need not be used.

The catalyst may be selected from those commonly used in thiol-ene reaction, but not limited thereto. Preference is given to radical polymerization initiators capable of generating radicals by heat, light or redox reaction.

Suitable catalysts include organic peroxides such as aqueous hydrogen peroxide, tert-butyl hydroperoxide, di-tert-butyl peroxide, (2-ethylhexanoyl)(tert-butyl) peroxide, benzoyl peroxide, cumene hydroperoxide, and dicumyl peroxide; azo compounds such as 2,2'-azobispropane, 2,2'-azobisisobutane, 2,2'-azobisisobutyronitrile, 2,2'-azobis-2-methylbutyronitrile, 2,2'-azobis-2-methylvaleronitrile, 2,2'-azobis-2,4-dimethylvaleronitrile, methyl 2,2'-azobis-2-methylpropionate, 2,2'-dichloro-2,2'-azobispropane, 2,2'-dichloro-2,2'-azobisbutane, 1,1'-azo(methylethyl)diacetate, 2,2'-azobisisobutylamide, dimethyl 2,2'-azobisisobutyrate, 3,5-dihydroxymethylphenylazo-2-methylmalonodinitrile, and dimethyl 4,4'-azobis-4-cyanovalerate; redox initiators such as hydrogen peroxide-iron(II) salt, cerium(IV) salt-alcohol, and organic peroxidedimethylaniline; photopolymerization initiators such as 2-benzyl-2-dimethylamino-1-(4-morpholinophenyl)-1-butanone, 2-methyl-1 -[4-(methylthio)phenyl] -2-morpholinopropan-1 - one, 2-dimethylamino-2-(4-methylbenzyl)-1-(4-morpholin-4-ylphenyl)butan-1-one, 1-hydroxycyclohexyl phenyl ketone, 2-hydroxy-2-methyl-1-phenylpropan-1-one, 2,2-dimethoxy-1,2-diphenylethan-1-one, 1-[4-(2-hydroxyethoxy)-phenyl]-2-hydroxy-2-methyl-1 -propan-1 -one, 2-hydroxy-1- {4-[4-(2-hydroxy-2-methylpropionyl)benzyl]phenyl } -2-methylpropan- 1 -one, 2,4,6-trimethylbenzoyl-diphenylphosphine oxide, bis(2,4,6-trimethylbenzoyl)phenylphosphine oxide, and bis(2,6-dimethoxybenzoyl)-2,4,4-trimethylpentylphosphine oxide; and dialkyl disulfides such as tetraalkylthiuram disulfides. These compounds may be used alone or in admixture.

Of these, (2-ethylhexanoyl)(tert-butyl) peroxide and 2,2'-azobis-2-methylbutyronitrile are preferred from the standpoint of reaction rate during thiol-ene reaction, with 2,2'-azobis-2-methylbutyronitrile being more preferred.

The amount of the catalyst used may be a catalytic amount. Typically, the amount is 0.001 to 10% by weight based on the total of the silicon-containing compound capped with alkenyl at molecular chain ends and the mercaptosilane of formula (4).

Although the thiol-ene reaction takes place in a solventless system, a solvent which is not detrimental to the reaction may be used.

Suitable solvents include hydrocarbon solvents such as pentane, hexane, heptane, octane, decane and cyclohexane, aromatic solvents such as benzene, toluene, and xylene, amide solvents such as formamide, N,N-dimethylformamide, pyrrolidone, and N-methylpyrrolidone, and ester solvents such as ethyl acetate, butyl acetate, γ-butyrolactone, and propylene glycol-1-monomethylether-2-acetate. They may be used alone or in admixture.

Although the temperature of thiol-ene reaction is not particularly limited, a temperature of 25 to 150°C, especially 40 to 100°C is preferred for adjusting the reaction rate appropriate and controlling side reactions.

The reaction time is typically 10 minutes to 24 hours though not particularly limited.

The curable composition, coating composition, or adhesive composition (sometimes commonly referred to as composition, hereinafter) of the invention contains (A) the organosilicon compound having formula (2) and (B) a curing catalyst.

The curable composition containing (A) the organosilicon compound having formula (2) is improved in cure during coating treatment or bonding treatment over the prior art compositions and offers a cured product which is least toxic due to the elimination of isocyanatosilanes.

The curing catalyst (B) is a component for promoting hydrolytic condensation of hydrolyzable groups on the organosilicon compound (A) with airborne moisture and helping the composition cure, and added for efficient curing. The curing catalyst is not particularly limited as long as it is used in conventional moisture condensation cure compositions. Examples include alkyl tin compounds such as dibutyltin oxide and dioctyltin oxide; alkyl tin ester compounds such as dibutyltin diacetate, dibutyltin dilaurate, dioctyltin dilaurate, dibutyltin dioctoate, dioctyltin dioctoate, and dioctyltin diversatate; titanates, titanium chelate compounds and partial hydrolyzates thereof such as tetraisopropoxytitanium, tetra-n-butoxytitanium, tetrakis(2-ethylhexoxy)titanium, dipropoxybis(acetylacetonato)titanium, titanium diisopropoxybis(ethylacetoacetate), titanium isopropoxyoctylene glycol; organometallic compounds such as zinc naphthenate, zinc stearate, zinc 2-ethyloctoate, iron 2-ethylhexoate, cobalt 2-ethylhexoate, manganese 2-ethylhexoate, cobalt naphthenate, aluminum trihydroxide, aluminum alcoholate, aluminum acylate, aluminum acylate salts, aluminosiloxy compounds, and aluminum chelates; aminoalkylsubstituted alkoxysilanes such as 3-aminopropyltrimethoxysilane, 3 -aminopropyltriethoxysilane, 3 -aminopropylmethyldimethoxysilane, 3-aminopropylmethyldiethoxysilane, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-β-(aminoethyl)-γ-aminopropylmethyldiethoxysilane, bis[3-(trimethoxysilyl)propyl]amine, bis[3-(triethoxysilyl)propyl]amine, N,N'-bis[3-(trimethoxysilyl)propyl]ethane-1,2-diamine, N,N' -bis[3 -(triethoxysilyl)propyl] ethane-1 ,2-diamine, N-phenyl-3-aminopropyltrimethoxysilane; amine compounds and salts thereof such as hexylamine and dodecylamine phosphate; quaternary ammonium salts such as benzyltriethylammonium acetate; alkali metal salts of lower fatty acids such as potassium acetate, sodium acetate, and lithium oxalate; dialkylhydroxylamines such as dimethylhydroxylamine and diethylhydroxylamine; silanes and siloxanes having a guanidyl group such as tetramethylguanidylpropyltrimethoxysilane, tetramethylguanidylpropylmethyldimethoxysilane, tetramethylguanidylpropyltriethoxysilane, tetramethylguanidylpropylmethyldiethoxysilane, tetramethylguanidylpropyltris(trimethylsiloxy)silane; phosphazene base-containing silanes and siloxanes such as N,N,N',N',N",N"-hexamethyl-N‴-[3-trimethoxysilyl]propyl]-phosphorimidic triamide, which may be used alone or in admixture.

Of these, preference is given to dioctyltin dilaurate, dioctyltin diversatate, tetraisopropoxytitanium, tetra-n-butoxytitanium, titanium diisopropoxybis(ethylacetoacetate), 3-aminopropyltrimethoxysilane, N-β-(aminoethyl)-γ-aminopropyltrimethoxysilane, bis[3-(trimethoxysilyl)propyl]amine, N,N'-bis[3-(trimethoxysilyl)propyl]ethane-1,2-diamine, and tetramethylguanidylpropyltrimethoxysilane because of more reactivity. From the standpoint of effective cure of the composition, more preference is given to dioctyltin dilaurate, dioctyltin diversatate, 3-aminopropyltrimethoxysilane, and tetramethylguanidylpropyltrimethoxysilane. From the standpoint that the composition is free of organotin compounds and less toxic, 3-aminopropyltrimethoxysilane and tetramethylguanidylpropyltrimethoxysilane are especially preferred. From the standpoint of effective cure of the composition, tetramethylguanidylpropyltrimethoxysilane is most preferred.

Although the amount of the curing catalyst added is not particularly limited, the amount is preferably 0.01 to 15 parts by weight, more preferably 0.1 to 5 parts by weight per 100 parts by weight of the organosilicon compound having formula (2) because it is desirable to adjust the curing rate to an appropriate range for efficient working.

The inventive composition may further comprise a solvent. The solvent used herein is not particularly limited as long as the organosilicon compound having formula (2) as the main component is dissolvable therein. Examples of the solvent include hydrocarbon solvents such as pentane, hexane, heptane, octane, decane, cyclohexane; aromatic solvents such as benzene, toluene, and xylene; amide solvents such as formamide, N,N-dimethylforamide, pyrrolidone, N-methylpyrrolidone; ester solvents such as ethyl acetate, butyl acetate, γ-butyrolactone, propylene glycol-1-monomethyl ether-2-acetate; ketone solvents such as acetone, methyl ethyl ketone and methyl isobutyl ketone; and ether solvents such as diethyl ether, dibutyl ether, cyclopentyl methyl ether, tetrahydrofuran, and 1,4-dioxane, which may be used alone or in admixture.

Of these, aromatic solvents such as toluene and xylene are preferred from the standpoints of solubility and volatility.

The amount of the solvent added is preferably 10 to 20,000 parts by weight, more preferably 100 to 10,000 parts by weight per 100 parts by weight of the organosilicon compound having formula (2).

It is noted that various additives such as adhesion improvers, inorganic and organic UV absorbers, storage stability improvers, plasticizers, fillers, pigments and flavors may be added to the inventive composition depending on a particular application.

A coated solid substrate may be obtained by coating the coating composition of the invention described above on the surface of a solid substrate and curing the composition to form a coating layer. Also, a bonded laminate may be obtained by coating the adhesive composition of the invention on the surface of a solid substrate, laying another solid substrate thereon, and curing the composition to form a bond layer.

The technique of coating each composition is not particularly limited. The coating technique may be selected as appropriate from well-known techniques such as spray coating, spin coating, dip coating, roller coating, brush coating, bar coating, and flow coating.

The solid substrate is not particularly limited. Examples include organic resin substrates such as epoxy resins, phenolic resins, polyimide resins, polycarbonate resins such as polycarbonates and polycarbonate blends, acrylic resins such as poly(methyl methacrylate), polyester resins such as polyethylene terephthalate), poly(butylene terephthalate), unsaturated polyester resins, polyamide resins, acrylonitrile-styrene copolymer resins, styrene-acrylonitrile-butadiene copolymer resins, polyvinyl chloride resins, polystyrene resins, blends of polystyrene and polyphenylene ether, cellulose acetate butyrate, polyethylene resins; metal substrates such as iron, copper and steel plates; paint-coated surfaces; glass; ceramics; concrete; slates; textiles; inorganic fillers such as wood, stone, tiles, (hollow) silica, titania, zirconia, and alumina; fiber glass parts such as glass fibers, glass clothes, glass tape, glass mat and glass paper. The material and shape of the substrate are not particularly limited.

The inventive composition is such that the organosilicon compound having formula (2) undergoes hydrolytic condensation reaction upon contact with airborne moisture. As the index of moisture in the atmosphere, any humidity in the range of RH 10% to 100% is acceptable. Since faster hydrolysis takes place at a higher humidity, moisture may be added to the atmosphere if desired.

The temperature and time of curing reaction may vary over a range depending on various factors such as a particular substrate, moisture concentration, catalyst concentration, and the type of hydrolyzable group. The curing reaction temperature is preferably normal temperature around 25°C from the standpoint of working. To promote curing reaction, the coating may be cured by heating within the range below which the substrate is heat resistant. The curing reaction time is typically about 1 minute to about 1 week from the standpoint of working efficiency.

The inventive composition cures effectively even at normal temperature. Particularly when room temperature cure is essential for in-situ application or the like, the composition is good in cure and working because the coating surface becomes tack-free within several minutes to several hours. Nevertheless, heat treatment within the range below which the substrate is heat resistant is acceptable.

### EXAMPLES

Examples and Comparative Examples are given below for further illustrating the invention although the invention is not limited thereto.

It is noted that the viscosity is measured at 25°C by a Brookfield rotational viscometer, and the molecular weight is a number average molecular weight (Mn) measured by gel permeation chromatography (GPC) versus polystyrene standards.

### [1] Synthesis of organosilicon compound

### [Example 1-1] Synthesis of organosilicon compound 1

A 200-mL separable flask equipped with a stirrer, reflux condenser and thermometer was charged with 100 g (0.015 mole as terminal vinyl functionality) of a both end vinyl-containing dimethylpolysiloxane compound having a Mn of 13,600 and 2.6 g (0.015 mole as mercapto functionality) of mercaptomethyltrimethoxysilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 15,200 and a viscosity of 610 mPa·s.

### [Example 1-2] Synthesis of organosilicon compound 2

A 200-mL separable flask equipped with a stirrer, reflux condenser and thermometer was charged with 100 g (0.015 mole as terminal vinyl functionality) of a both end vinyl-containing dimethylpolysiloxane compound having a Mn of 13,600 and 2.3 g (0.015 mole as mercapto functionality) of mercaptomethyldimethoxymethylsilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 14,800 and a viscosity of 590 mPa·s.

### [Example 1-3] Synthesis of organosilicon compound 3

A 200-mL separable flask equipped with a stirrer, reflux condenser and thermometer was charged with 100 g (0.015 mole as terminal vinyl functionality) of a both end vinyl-containing dimethylpolysiloxane compound having a Mn of 13,600 and 3.2 g (0.015 mole as mercapto functionality) of mercaptomethyltriethoxysilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 15,900 and a viscosity of 550 mPa·s.

### [Example 1-4] Synthesis of organosilicon compound 4

A 200-mL separable flask equipped with a stirrer, reflux condenser and thermometer was charged with 100 g (0.0051 mole as terminal vinyl functionality) of a both end vinyl-containing dimethylpolysiloxane compound having a Mn of 39,900 and 0.86 g (0.0051 mole as mercapto functionality) of mercaptomethyltrimethoxysilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 41,900 and a viscosity of 11,100 mPa·s.

### [Example 1-5] Synthesis of organosilicon compound 5

A 200-mL separable flask equipped with a stirrer, reflux condenser and thermometer was charged with 72 g (0.42 mole) of mercaptomethyltrimethoxysilane and 0.05 g of 2,2'-azobis-2-methylbutyronitrile and heated at 90°C. Then 40 g (0.21 mole) of 1,3-divinyltetramethyldisiloxane was added dropwise to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a viscosity of 10 mPa·s.

### [Example 1-6] Synthesis of organosilicon compound 6

A 200-mL separable flask equipped with a stirrer, reflux condenser and thermometer was charged with 72 g (0.42 mole) of mercaptomethyltrimethoxysilane and 0.05 g of 2,2'-azobis-2-methylbutyronitrile and heated at 90°C. Then 23.6 g (0.21 mole) of dimethyldivinylsilane was added dropwise to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a viscosity of 6 mPa·s.

### [Example 1-7] Synthesis of organosilicon compound 7

A 200-mL separable flask equipped with a stirrer, reflux condenser and thermometer was charged with 72 g (0.42 mole) of mercaptomethyltrimethoxysilane and 0.05 g of 2,2'-azobis-2-methylbutyronitrile and heated at 90°C. Then 37.9 g (0.11 mole) of 1,3,5,7-tetravinyltetramethylcyclotetrasiloxane was added dropwise to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a viscosity of 40 mPa·s.

### [Example 1-8] Synthesis of organosilicon compound 8

A 200-mL separable flask equipped with a stirrer, reflux condenser and thermometer was charged with 100 g (0.012 mole as terminal vinyl functionality) of a both end vinyl-containing dimethylpolysiloxane compound having a Mn of 15,400 and 2.0 g (0.012 mole as mercapto functionality) of mercaptomethyltrimethoxysilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 15,600 and a viscosity of 1,200 mPa·s.

### [Comparative Example 1-1] Synthesis of organosilicon compound 9

A 200-mL separable flask equipped with a stirrer, reflux condenser and thermometer was charged with 100 g (0.040 mole as terminal hydroxyl functionality) of a both end hydroxyl-containing polypropylene glycol having a Mn of 7,600 and 7.1 g (0.040 mole of isocyanate functionality) of isocyanatomethyltrimethoxysilane and heated at 80°C. Then 0.1 g of dioctyltin dilaurate was added to the contents, which were stirred at 80°C for 3 hours. On IR analysis, the time when the peak assigned to isocyanate group on the reactant disappeared completely and instead, the peak assigned to a urethane bond was detected was regarded the end of reaction.

The reaction product was a pale yellow transparent liquid and had a Mn of 8,000, a degree of polymerization of 130, and a viscosity of 3,700 mPa·s.

### [Comparative Example 1-2] Synthesis of organosilicon compound 10

A 200-mL separable flask equipped with a stirrer, reflux condenser and thermometer was charged with 100 g (0.015 mole as terminal vinyl functionality) of a both end vinyl-containing dimethylpolysiloxane compound having a Mn of 13,600 and 2.9 g (0.015 mole of mercapto functionality) of 3-mercaptopropyltrimethoxysilane and heated at 90°C. Then 0.1 g of 2,2'-azobis-2-methylbutyronitrile was added to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a Mn of 14,600 and a viscosity of 620 mPa·s.

### [Comparative Example 1-3] Synthesis of organosilicon compound 11

A 200-mL separable flask equipped with a stirrer, reflux condenser and thermometer was charged with 100 g (0.50 mole) of 3-mercaptopropyltrimethoxysilane and 0.05 g of 2,2'-azobis-2-methylbutyronitrile and heated at 90°C. Then 47.5 g (0.25 mole) of 1,3-divinyltetramethyldisiloxane was added dropwise to the contents, which were stirred at 90°C for 3 hours. On ¹H-NMR analysis, the time when the peaks assigned to vinyl and mercapto groups on the reactants disappeared completely and instead, the peak assigned to the desired organosilicon compound was detected was regarded the end of reaction.

The reaction product was a colorless transparent liquid and had a viscosity of 12 mPa·s.

### [Comparative Example 1-4] Synthesis of organosilicon compound 12

A 200-mL separable flask equipped with a stirrer, reflux condenser and thermometer was charged with 76.3 g (0.41 mole) of 1,3-divinyltetramethyldisiloxane and 0.4 g (1.25×10⁻⁵ mole of platinum atom per mole of trimethoxysilane) of a toluene solution of platinum 1,3-divinyl-1,1,3,3-tetramethyldisiloxane complex and heated at 80°C. Then 100 g (0.82 mole) of trimethoxysilane was added dropwise to the contents, which were stirred at 80°C for 3 hours. On IR analysis, the time when the absorption peaks assigned to Si-H groups on the reactant disappeared completely was regarded the end of reaction.

The reaction product was a colorless transparent liquid and had a viscosity of 5 mPa·s.

### [2] Preparation of composition and cured coating

### [Example 2-1]

A composition was prepared by mixing 100 parts by weight of organosilicon compound 1 in Example 1-1 and 0.5 part by weight of tetramethylguanidylpropyltrimethoxysilane as the curing catalyst on a mixer under moisture-barrier conditions until uniform.

The composition was coated onto a glass plate in air at 25°C and 50% RH by means of a bar coater No. 14, and dried and cured in air at 25°C and 50% RH for 1 day, yielding a cured coating.

### [Examples 2-2 to 2-8 and Comparative Examples 2-1 to 2-4]

Compositions and cured coatings were prepared as in Example 2-1 aside from using organosilicon compounds 2 to 8 in Examples 1-2 to 1-8 or organosilicon compounds 9 to 12 in Comparative Examples 1-1 to 1-4 instead of organosilicon compound 1 in Example 2-1.

### [Example 2-9]

A composition and cured coating were prepared as in Example 2-1 aside from using 5 parts by weight of 3-aminopropyltrimethoxysilane as the curing catalyst instead of 0.5 part by weight of tetramethylguanidylpropyltrimethoxysilane.

### [Example 2-10]

A composition and cured coating were prepared as in Example 2-1 aside from using 5 parts by weight of dioctyltin diversatate as the curing catalyst instead of 0.5 part by weight of tetramethylguanidylpropyltrimethoxysilane.

### [Example 2-11]

A composition and cured coating were prepared as in Example 2-1 aside from using 0.5 part by weight of titanium diisopropoxybis(ethylacetoacetate) as the curing catalyst instead of 0.5 part by weight of tetramethylguanidylpropyltrimethoxysilane.

### [Comparative Example 2-5]

A composition and cured coating were prepared as in Example 2-1 aside from using a dimethylpolysiloxane compound containing at both ends of the molecular chain reactive silicon groups represented by the following structural formula (6) (Mn 15,000, viscosity 890 mPa·s) instead of organosilicon compound 1 in Example 2-1.

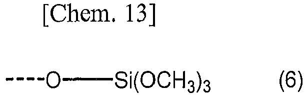

Herein the broken line designates a valence bond.

### [Comparative Example 2-6]

A composition and cured coating were prepared as in Example 2-1 aside from using a dimethylpolysiloxane compound containing at both ends of the molecular chain reactive silicon groups represented by the following structural formula (7) (Mn 14,000, viscosity 610 mPa·s) instead of organosilicon compound 1 in Example 2-1.

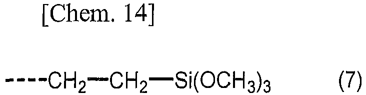

Herein the broken line designates a valence bond.

### [Comparative Example 2-7]

A composition and cured coating were prepared as in Comparative Example 2-3 aside from using 5 parts by weight of 3-aminopropyltrimethoxysilane as the curing catalyst instead of 0.5 part by weight of tetramethylguanidylpropyltrimethoxysilane.

### [Comparative Example 2-8]

A composition and cured coating were prepared as in Comparative Example 2-4 aside from using 5 parts by weight of 3-aminopropyltrimethoxysilane as the curing catalyst instead of 0.5 part by weight of tetramethylguanidylpropyltrimethoxysilane.

The cured coatings in Examples 2-1 to 2-11 and Comparative Examples 2-1 to 2-8 were evaluated by the following tests. The results are shown in Tables 1 and 2.

### [Tack-free time]

A specimen obtained by coating the composition onto a glass plate by the above coating technique was allowed to stand in air at 25°C and 50% RH, during which moisture cure took place. The time taken until the coating became tack-free when the finger was pressed onto the coating surface was reported, with a smaller value indicating better cure.

### [Yellowing resistance]

A specimen having a cured coating formed on a glass plate by the above coating technique was exposed in air at 25°C and 50% RH for 2 weeks to UV from a sterilizing lamp (accumulative dose 26,000 mJ/cm²). The degree of yellowing of the cured coating before and after the exposure was evaluated according to JIS K7373 using a colorimeter, and reported as ΔYI (a change of yellowness index YI), with a smaller value indicating better yellowing resistance.

The specimen was rated yellowing resistant (O) when ΔYI was less than 0.5, or poor (X) when ΔYI was 0.5 or more.

### [Heat resistance]

A specimen having a cured coating formed on a glass plate by the above coating technique was subjected to a test of heating at 150°C in air for 500 hours. The degree of yellowing of the cured coating was visually observed.

The specimen was rated heat resistant (O) when no yellowing was observed, or poor (X) when significant yellowing was observed.

### [Storage stability]

Each of the compositions in Examples and Comparative Examples immediately after preparation was placed in a closed container where a heating test at 70°C was carried out for 7 days. A percent change of viscosity of each composition before and after the heating test was determined, with a smaller value indicating better storage stability.

The specimen was rated storage stable (O) when the percent viscosity change was less than 1.5, or poor (X) when the percent viscosity change was 1.5 or more.

**[Table 1]**

| | | Example | | | | | | | | | | |
|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 |
| Organosilicon compound | | 1 | 2 | 3 | 4 | 5 | 6 | 7 | 8 | 1 | 1 | 1 |
| Tack-free time | | 10 min | 20 min | 20 min | 1 hr | 30 min | 30 min | 10 min | 10 min | 12 hr | 20 min | 30 min |
| Yellowing resistance | ΔYI | 0.2 | 0.2 | 0.2 | 0.1 | 0.3 | 0.3 | 0.4 | 0.2 | 0.3 | 0.1 | 0.2 |
| | Rating | O | O | O | O | O | O | O | O | O | O | O |
| Heat resistance | ΔYI | 0.1 | 0.1 | 0.1 | 0.1 | 0.3 | 0.4 | 0.3 | 0.1 | 0.3 | 0.1 | 0.3 |
| | Rating | O | O | O | O | O | O | O | O | O | O | O |
| Storage stability | Viscosity change | 1.2 | 1.1 | 1.0 | 1.1 | 1.3 | 1.3 | 1.4 | 1.1 | 1.1 | 1.4 | 1.2 |
| | Rating | O | O | O | O | O | O | O | O | O | O | O |

**[Table 2]**

| | | Comparative Example | | | | | | | |
|---|---|---|---|---|---|---|---|---|---|
| | | 2-1 | 2-2 | 2-3 | 2-4 | 2-5 | 2-6 | 2-7 | 2-8 |
| Organosilicon compound | | 9 | 10 | 11 | 12 | - | - | 11 | 12 |
| Tack-free time | | 2 hr | 50 hr | 24 hr | not cured | 3 hr | not cured | not cured | not cured |
| Yellowing resistance | ΔYI | 4.4 | 0.7 | 0.6 | - | 0.2 | - | - | - |
| | Rating | X | X | X | - | O | - | - | - |
| Heat resistance | ΔYI | 5.3 | 4.5 | 5.2 | - | 0.1 | - | - | - |
| | Rating | X | X | X | - | O | - | - | - |
| Storage stability | Viscosity change | 1.4 | 1.2 | 1.3 | 1.4 | 3.2 | 1.2 | 1.2 | 1.2 |
| | Rating | O | O | O | O | X | O | O | O |

As seen from Tables 1 and 2, the compositions and cured coatings of Examples 2-1 to 2-11 using organosilicon compounds 1 to 8 in Examples 1-1 to 1-8 are improved in curability, yellowing resistance, heat resistance and storage stability over the compositions and cured coatings of Comparative Examples 2-1 to 2-8, meeting the physical properties at the same time.

On the other hand, the compositions and cured coatings of Comparative Examples 2-1 to 2-8 fail to meet curability, yellowing resistance, heat resistance and storage stability at the same time. In Comparative Examples 2-4, 2-6 to 2-8, the coatings under-cured or did not cure at all.

As discussed above, using the organosilicon compounds within the scope of the invention, compositions and cured coatings having improved curability, yellowing resistance, heat resistance and storage stability are obtained. These compositions can satisfy the physical properties at the same time, which are difficult to achieve with the prior art compositions.

Also the compositions are less toxic because of the elimination of isocyanatosilanes. Even when amine compounds are used as the curing catalyst in order to formulate compositions free of organotin compounds which are toxic, the resulting compositions are effectively curable.

## Claims

1. An organosilicon compound having the structural formula (2): 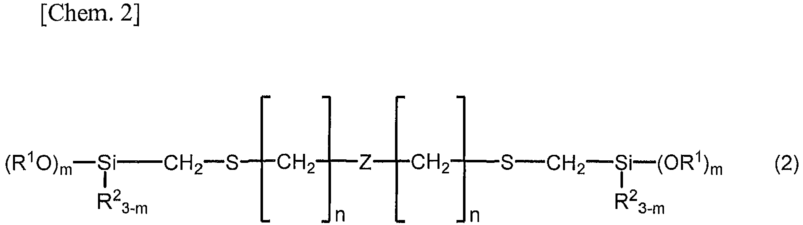
wherein Z is a divalent silicon-containing organic group, and
wherein R¹ is each independently a substituted or unsubstituted C₁-C₁₀ alkyl group or a substituted or unsubstituted C₆-C₁₀ aryl group, R² is each independently a substituted or unsubstituted C₁-C₁₀ alkyl group or a substituted or unsubstituted C₆-C₁₀ aryl group, and m is a number of 1 to 3, n is an integer of at least 2.

2. The organosilicon compound of claim 1 wherein Z has a linear structure.

3. The organosilicon compound of claim 1 wherein Z has the formula (3): 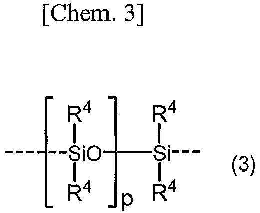 wherein R⁴ is each independently hydrogen, a substituted or unsubstituted C₁-C₁₀ alkyl group, or a substituted or unsubstituted C₆-C₁₀ aryl group, p is a number of at least 0, and the broken line represents a valence bond.

4. A method for preparing the organosilicon compound of claim 1, comprising the step of reacting a silicon-containing compound having two alkenyl group per molecule with a compound having mercapto and alkoxysilyl groups represented by the formula (4): 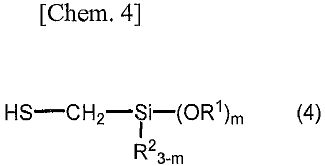 wherein R¹, R², and m are as defined above.

5. The method of claim 4 wherein the silicon-containing compound having two alkenyl group per molecule is represented by the formula (5): 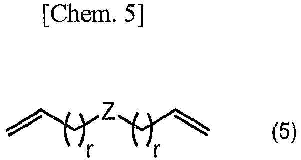 wherein Z is a divalent silicon-containing organic group and r is an integer of at least 0.

6. The method of claim 5 wherein Z has the formula (3): 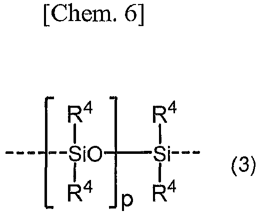 wherein R⁴ is each independently hydrogen, a substituted or unsubstituted C₁-C₁₀ alkyl group, or a substituted or unsubstituted C₆-C₁₀ aryl group, p is a number of at least 0, and the broken line represents a valence bond.

7. A curable composition comprising (A) the organosilicon compound of any one of claims 1 to 3 and (B) a curing catalyst.

8. The curable composition of claim 7 wherein the curing catalyst (B) is an amine compound.

9. A cured product obtained from curing of the curable composition of claim 8 or 9.

10. A coating composition comprising (A) the organosilicon compound of any one of claims 1 to 3 and (B) a curing catalyst.

11. The coating composition of claim 10 wherein the curing catalyst (B) is an amine compound.

12. An article having a coating layer obtained from curing of the coating composition of claim 10 or 11.

13. An adhesive composition comprising (A) the organosilicon compound of any one of claims 1 to 3 and (B) a curing catalyst.

14. The adhesive composition of claim 13 wherein the curing catalyst (B) is an amine compound.

15. An article having an adhesive layer obtained from curing of the adhesive composition of claim 13 or 14.

## Patentansprüche

1. Organosiliciumverbindung mit der Strukturformel (2): 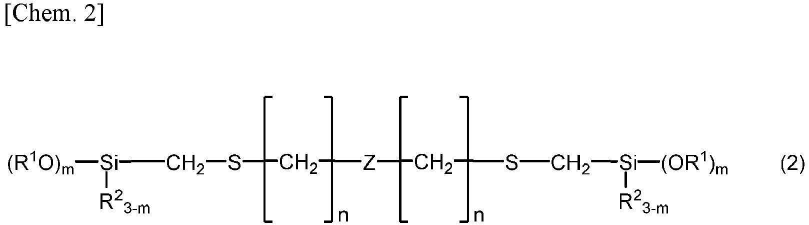
worin Z eine zweiwertige siliciumhaltige organische Gruppe ist, und
worin R¹ jeweils unabhängig voneinander eine substituierte oder unsubstituierte C₁-C₁₀-Alkylgruppe oder eine substituierte oder unsubstituierte C₆-C₁₀-Arylgruppe ist, R² jeweils unabhängig voneinander eine substituierte oder unsubstituierte C₁-C₁₀-Alkylgruppe oder eine substituierte oder unsubstituierte C₆-C₁₀-Arylgruppe ist, und m eine Zahl von 1 bis 3 ist, n eine ganze Zahl von mindestens 2 ist.

2. Organosiliciumverbindung nach Anspruch 1, wobei Z eine lineare Struktur aufweist.

3. Organosiliciumverbindung nach Anspruch 1, wobei Z die Formel (3) hat: 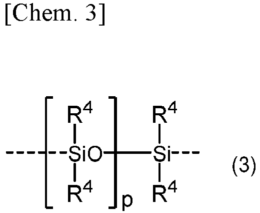 worin R⁴ jeweils unabhängig voneinander Wasserstoff, eine substituierte oder unsubstituierte C₁-C₁₀-Alkylgruppe oder eine substituierte oder unsubstituierte C₆-C₁₀-Arylgruppe ist, p eine Zahl von mindestens 0 ist und die gestrichelte Linie eine Valenzbindung darstellt.

4. Verfahren zur Herstellung der Organosiliciumverbindung nach Anspruch 1, umfassend den Schritt des Umsetzens einer siliciumhaltigen Verbindung mit zwei Alkenylgruppen pro Molekül mit einer Verbindung mit Mercapto- und Alkoxysilylgruppen, dargestellt durch die Formel (4): 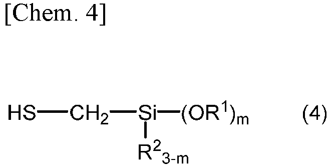 worin R¹, R² und m wie oben definiert sind.

5. Verfahren nach Anspruch 4, wobei die siliciumhaltige Verbindung mit zwei Alkenylgruppen pro Molekül durch die Formel (5) dargestellt ist: 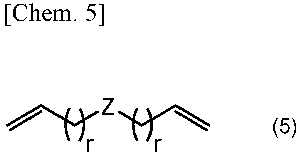 worin Z eine zweiwertige siliciumhaltige organische Gruppe ist und r eine ganze Zahl von mindestens 0 ist.

6. Verfahren nach Anspruch 5, wobei Z die Formel (3) hat: 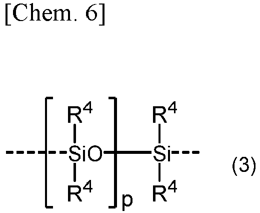 worin R⁴ jeweils unabhängig voneinander Wasserstoff, eine substituierte oder unsubstituierte C₁-C₁₀-Alkylgruppe oder eine substituierte oder unsubstituierte C₆-C₁₀-Arylgruppe ist, p eine Zahl von mindestens 0 ist und die gestrichelte Linie eine Valenzbindung darstellt.

7. Härtbare Zusammensetzung, umfassend (A) die Organosiliciumverbindung nach einem der Ansprüche 1 bis 3 und (B) einen Härtungskatalysator.

8. Härtbare Zusammensetzung nach Anspruch 7, wobei der Härtungskatalysator (B) eine Aminverbindung ist.

9. Gehärtetes Produkt, erhalten durch Härten der härtbaren Zusammensetzung nach Anspruch 8 oder 9.

10. Beschichtungszusammensetzung, umfassend (A) die Organosiliciumverbindung nach einem der Ansprüche 1 bis 3 und (B) einen Härtungskatalysator.

11. Beschichtungszusammensetzung nach Anspruch 10, wobei der Härtungskatalysator (B) eine Aminverbindung ist.

12. Gegenstand mit einer Beschichtungsschicht, erhalten durch Härten der Beschichtungszusammensetzung nach Anspruch 10 oder 11.

13. Klebstoffzusammensetzung, umfassend (A) die Organosiliciumverbindung nach einem der Ansprüche 1 bis 3 und (B) einen Härtungskatalysator.

14. Klebstoffzusammensetzung nach Anspruch 13, wobei der Härtungskatalysator (B) eine Aminverbindung ist.

15. Gegenstand mit einer Klebstoffschicht, erhalten durch Härten der Klebstoffzusammensetzung nach Anspruch 13 oder 14.

## Revendications

1. Composé organosilicié ayant la formule structurale (2) : 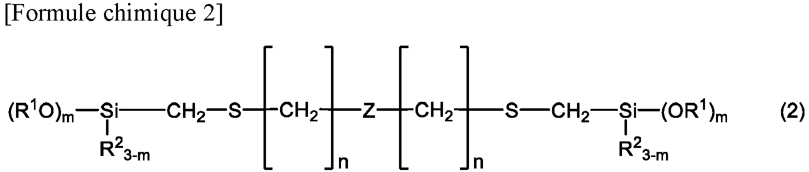
dans laquelle Z est un groupe organique divalent contenant du silicium, et
dans laquelle les R¹ représentent chacun, indépendamment l'un de l'autre, un groupe alkyle en C₁ à C₁₀ substitué ou non substitué ou un groupe aryle en C₆ à C₁₀ substitué ou non substitué, les R² représentent chacun, indépendamment l'un de l'autre, un groupe alkyle en C₁ à C₁₀ substitué ou non substitué ou un groupe aryle en C₆ à C₁₀ substitué ou non substitué, et m est un nombre de 1 à 3, n est un entier au moins égal à 2.

2. Composé organosilicié selon la revendication 1, dans lequel Z a une structure linéaire.

3. Composé organosilicié selon la revendication 1, dans lequel Z a la formule (3) : 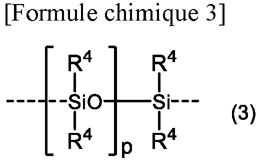 dans laquelle les R⁴ sont chacun, indépendamment les uns des autres, un hydrogène, un groupe alkyle en C₁ à C₁₀ substitué ou non substitué ou un groupe aryle en C₆ à C₁₀ substitué ou non substitué, p est un nombre au moins égal à 0, et la ligne de tirets représente une liaison de valence.

4. Procédé pour préparer le composé organosilicié selon la revendication 1, comportant l'étape consistant à faire réagir un composé contenant du silicium ayant deux groupes alcényle par molécule avec un composé ayant des groupes mercapto et alcoxysilyle représentés par la formule (4) : 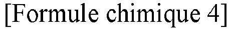 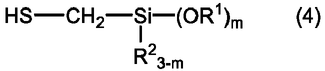 dans laquelle R¹, R² et m sont tels que définis ci-dessus.

5. Procédé selon la revendication 4, dans lequel le composé contenant du silicium ayant deux groupes alcényle par molécule est représenté par la formule (5) : 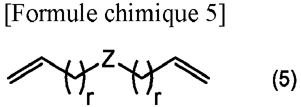 dans laquelle Z est un groupe organique divalent contenant du silicium et r est un entier au moins égal à 0.

6. Procédé selon la revendication 5, dans lequel Z a la formule (3) : 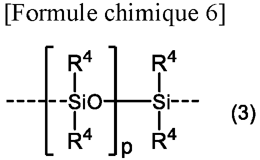 dans laquelle les R⁴ sont chacun, indépendamment les uns des autres, un hydrogène, un groupe alkyle en C₁ à C₁₀ substitué ou non substitué ou un groupe aryle en C₆ à C₁₀ substitué ou non substitué, p est un nombre au moins égal à 0, et la ligne de tirets représente une liaison de valence.

7. Composition durcissable comportant (A) le composé organosilicié selon l'une quelconque des revendications 1 à 3 et (B) un catalyseur durcisseur.

8. Composition durcissable selon la revendication 7, dans laquelle le catalyseur durcisseur (B) est un composé amine.

9. Produit durci obtenu par durcissement de la composition durcissable selon la revendication 8 ou 9.

10. Composition de revêtement comportant (A) le composé organosilicié selon l'une quelconque des revendications 1 à 3 et (B) un catalyseur durcisseur.

11. Composition de revêtement selon la revendication 10, dans laquelle le catalyseur durcisseur (B) est un composé amine.

12. Article ayant une couche de revêtement obtenue par durcissement de la composition de revêtement selon la revendication 10 ou 11.

13. Composition adhésive comportant (A) le composé organosilicié selon l'une quelconque des revendications 1 à 3 et (B) un catalyseur durcisseur.

14. Composition adhésive selon la revendication 13, dans laquelle le catalyseur durcisseur (B) est un composé amine.

15. Article ayant une couche d'adhésif obtenue par durcissement de la composition adhésive selon la revendication 13 ou 14.
